# EUROPÄISCHE PATENTSCHRIFT

(11) **EP 0 725 207 B1**
(45) Veröffentlichungstag und Bekanntmachung des Hinweises auf die Patenterteilung: **01.09.1999**
(21) Anmeldenummer: 95120109.4
(22) Anmeldetag: 19.12.1995
(51) Int. Cl.: F01L 1/02, F01L 1/46, F02B 77/08

(54) **Verfahren zur Überwachung des Verschleisses zumindest einer Motorsteuerkette und Verwendung einer Diagnoseeinrichtung zur Durchführung desselben**
Method for monitoring the wear of the distribution chain of an internal combustion engine and device for its execution
Procédé pour la surveillance d'usure d'une chaîne de distribution pour un moteur à combustion interne et dispositif pour son exécution

(30) Priorität: 03.02.1995 DE 19503457
(43) Veröffentlichungstag der Anmeldung: 07.08.1996
(73) Patentinhaber: DaimlerChrysler AG, 70567 Stuttgart (DE)
(72) Erfinder: Klein, Siegfried, Dipl.-Ing., D-73734 Esslingen (DE); Rehfus, Bernd, Dipl.-Ing., D-73732 Esslingen (DE)

(56) Entgegenhaltungen:
- DE-A- 3 524 338
- DE-A- 4 334 148
- US-A- 4 601 266
- PATENT ABSTRACTS OF JAPAN vol. 008, no. 270 (M-344), 11.Dezember 1984 & JP-A-59 140954 (HINO JIDOSHA KOGYO KK), 13.August 1984,
- PATENT ABSTRACTS OF JAPAN vol. 012, no. 428 (M-762), 11.November 1988 & JP-A-63 162940 (FUJI HEAVY IND LTD), 6.Juli 1988,
- MTZ MOTORTECHNISCHE ZEITSCHRIFT, Bd. 54, Nr. 4, 1.April 1993, Seiten 184-189, XP000364145 HEINTZEN D ET AL: "EIN NEUES VERFAHREN ZUR MESSUNG UND BEWERTUNG DER DYNAMISCHEN POSITIONSDIFFERENZ IN ROTIERENDEN SYSTEMEN"

## Beschreibung

Die Erfindung betrifft Verfahren zur Überwachung des Verschleißes zumindest einer Motorsteuerkette gemäß dem Oberbegriff des Anspruches 1 bezüglich des Verfahrens und eine Verwendung einer Diagnoseeinrichtung zur Überwachung desselben.

Ein gatttungsgemäßes Verfahren ist aus der DE-PS 33 37 979 bekannt. Dort wird zur Ermittlung bzw. zur Überwachung des Kettenverschleißes einer Motorsteuerkette an einem Kettenrad radial zu diesem beweglich ein Meßschuh extern angeordnet, an dessen Sohle die Kettenbolzen während des Durchlaufes der Kette entlanggleiten. Der Meßschuh beaufschlagt die Kettenbolzen mit einem geringen Antastdruck. Bei einem Einzelgliedschaden erfährt die Kette eine Längung, die sich beim Eingreifen in die Verzahnung des Kettenrades in einer radialen Auslenkung des Kettenbolzens aus dem Zahnzwischenraum heraus bemerkbar macht. Diese radiale Auslenkung wirkt jedoch auf den Meßschuh in der Weise, daß dieser kurzzeitig und geringfügig nach außen gedrückt wird. Der Meßschuh ist nun mit einem Weggeber verbunden, der sämtliche radiale Auslenkungen aufnimmt und diese beispielsweise als elektrische Meßsignale zur Verarbeitung an einen Mikroprozessor weiterleitet. Dieser vergleicht die Höhe der Meßsignale mit einem vorgegebenen Sollwert, der die Verschleißgrenze angibt. Bei Überschreiten dieses Sollwertes wird ein unzulässiger Verschleiß der Steuerkette angezeigt. Das bekannte Verfahren bzw. die bekannte Diagnoseeinrichtung kann jedoch nur im Werkstattbereich zur Wartung oder zum Zwecke wissenschaftlicher Grundlagenuntersuchungen eingesetzt werden, da der Meßschuh nur übergangsweise, d.h. für den Zeitraum der Verschleißmessung, angeordnet wird. Der als Verschleißsensor dienende Meßschuh ist dazu nur extern einbringbar. Desweiteren muß zur Anordnung des Meßschuhs aufgrund der engen Bauräume im Motorraum eines Kraftfahrzeuges und gegebenenfalls wegen der Verkapselung des Motors dieser ausgebaut werden, was einen erheblichen Wartungsaufwand darstellt. Dieser kann unter Umständen unnötig sein, wenn sich nach der Messung herausstellt, daß die Steuerkette gar nicht unzulässig verschlissen ist. Andererseits kann der Verschleiß innerhalb eines Wartungsintervalls bereits so groß sein, daß die Steuerkette während des Fahrbetriebs des Kraftfahrzeuges reißt, so daß irreparable Motorschäden auftreten. Dies kann mit dem bekannten Verfahren bzw. der bekannten Diagnoseeinrichtung keinesfalls vermieden werden.

Die Entgegenhaltung JP-A-59 140 954 betrifft die präzise Vorhersage des Risses eines Motorzahnriemens. Hierzu werden zwischen der Nockenwelle und der Kurbelwelle zwei elastische Zahnriemen angebracht, wobei nach dem Riß des ersten Zahnriemens sich aufgrund der nun auftretenden abrupten Doppelbelastung des zweiten Riemens eine Längung von diesem einstellt. Dabei ist die Längung kein Indiz des Verschleißes des Zahnriemens selbst, sondern sie erfolgt lediglich aufgrund der schon erwähnten Mehrbelastung. Die Mehrbelastung wird nach kurzer Zeit in eine Überlastung des zweiten Zahnriemens übergehen, der bald darauf - wenn keine gegenteiligen Maßnahmen getroffen werden - schließlich ebenfalls reißen wird. Des weiteren sind bei der bekannten Vorrichtung zwei Sensoren, je einer an beiden Wellen angeordnet, vorgesehen, die beide Impulse während der Rotation der Riemenscheiben abgeben, welche Impulse einem Phasendifferenz-Erkennungskreislauf zugeführt werden. In dem Fall, in dem plötzlich eine Längung des zweiten Riemens eintritt, weichen die Riemenscheiben von ihrem Gleichlauf ab, so daß eine Phasendifferenz zwischen den Impulsen gemessen wird. Sodann wird ein Signal ausgegeben, um eine Alarmeinheit zu betätigen.

Des weiteren ist aus der DE 43 34 148 A1 bekannt, zur Optimierung der Phasentreue zwischen antreibender und getriebener Welle eines Zugmittelgetriebes mittels einer Spannvorrichtung in dessen Leertrum die Ist-Winkelposition der antreibenden Welle und der getriebenen Welle zu messen und eine Winkelabweichung der getriebenen Welle aus deren Ist-Winkelposition und einer jeweils berechneten Sollwinkelposition zu berechnen, wonach die Spannvorrichtung zur Verringerung der Winkelabweichung verstellt wird.

Weiterhin ist aus der US 4,601,266 eine hydraulisch betätigbare Spanneinrichtung zum Spannen von Motorsteuerketten im Motorbetrieb bei Längung der Kette bekannt. Der Kettenspanner kompensiert Kettenlängungen, die durch Kettenverschleiß hervorgerufen werden, und andere Fehler in der zeitlichen Abstimmung der Betätigung der Gaswechselventile, welche durch Herstellungstoleranzen und so weiter hervorgerufen werden. Die bekannte Einrichtung reagiert sofort mit einer vergrößerten Spannung der Kette, wenn eine Differenz zwischen einem Sollwert und der relativen Phasenlage zweier Wellen auftritt. Um mit Erhöhung der Kettenspannung auf die Steuerzeiten der Gaswechselventile sinnvoll einzuwirken, darf die Abweichung der relativen Phasenlage vom Sollwert nur gering sein. Bei der bekannten Kettenspanneinrichtung muß prompt auf eine Abweichung der Phasenlage reagiert werden, um kontinuierlich einer Verschlechterung der motorischen Bedingungen entgegenzuwirken. Diese Schrift läßt entnehmen, daß Abnutzung einer Kette in einem Kettentrieb zu Phasenfehlern führt.

Der Erfindung liegt die Aufgabe zugrunde, ein gattungsgemäßes Verfahren, dahingehend weiterzuentwickeln, daß ein unzulässiger Verschleiß der Steuerkette rechtzeitig - d.h. schon während des Fahrbetriebes - und mit geringstmöglichem Aufwand ermittelt werden kann. Des weiteren soll eine Verwendung einer Diagnoseeinrichtung zur Überwachung des Verschleißes aufgezeigt werden.

Die Aufgabe ist erfindungsgemäß jeweils durch die Merkmale des Patentanspruches 1 bis 5 hinsichtlich des Verfahrens und durch die Merkmale der Patentansprüche 13 und 16 hinsichtlich der Verwendung einer Diagnoseeinrichtung gelöst.

Durch die Anordnung jeweils eines motorintegrierten bordeigenen Sensors an beabstandeten Kettenrädern im Kettentrieb, an denen jeweils wenigstens eine Markierung angebracht ist, erzeugt diese mit dem zugehörigen Sensor zumindest einmal pro Umlauf eines jeden Kettenrades ein Signal, das die Winkelstellung des jeweiligen Kettenrades repräsentiert. Dabei wird die Phasenlage der beiden Signalen zueinander ermittelt. Ausgehend von einer neuen fehlerlosen, d.h. unverschlissenen Kette zeigt eine Verschiebung der Phasenlage den Grad bzw. die Höhe des Verschleißes an. Bei einer Abweichung der Phasenlage von einem bestimmten vorgegebenen Sollwert wird ein unzulässiger Verschleiß erkannt, was beispielsweise als Aufblinken einer Kontrollampe im Fahrgastraum zum Ausdruck gebracht werden kann. Mit der Phasenlagendetektion zweier Signale von unterschiedlichen Kettenrädern in einfacher Weise eine Diagnoseeinrichtung bzw. ein Verfahren ermöglicht, mit der(dem) mit geringem Aufwand der Verschleiß der Steuerkette jederzeit und/oder kontinuierlich überwacht werden kann, so daß rechtzeitig ein unzulässig starker Verschleiß der Steuerkette hinsichtlich einer gleichmäßigen Längung der Kette und einer Längung infolge eines Einzelkettengliedschadens erkannt werden kann. Dadurch, daß dies während des Motorbetriebes selbsttätig und individuell geschieht, ist eine vorsorgliche und unter Umständen unnötige Kettenerneuerung vermeidbar. Die Steuerkette wird nur dann, wenn es wirklich erforderlich ist, rechtzeitig, bevor die Gefahr eines teueren oder gar irreparablen Motorfolgeschadens aufgrund eines etwaigen Steuerkettenbruches erwachsen kann, gewechselt. Dabei werden eventuell unnötige Wartungskosten und -zeit vermieden. Zudem ergibt sich daraus eine Reduzierung der routinemäßigen Wartungsumfänge und eine entsprechende Kostenentlastung für den Kunden ohne Einbuße an Betriebssicherheit.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einer Prinzipskizze einen Kettentrieb einer Motorsteuerkette mit den Sensoren der erfindungsgemäßen Diagnoseeinrichtung,
Fig. 2 in einer Prinzipdarstellung im Spannung-Zeit-Diagramm die Signalfolge der Sensoren aus Fig. 1,
Fig. 3 in einem Phasen-Kubelwellenumdrehung-Diagramm die Phasenlage der Signale der Sensoren aus Fig. 1 zueinander bei verschiedenen Verschleißzuständen der Steuerkette,
Fig. 4 in einem Flußdiagramm die Verfahrensweise der Diagnoseeinrichtung.

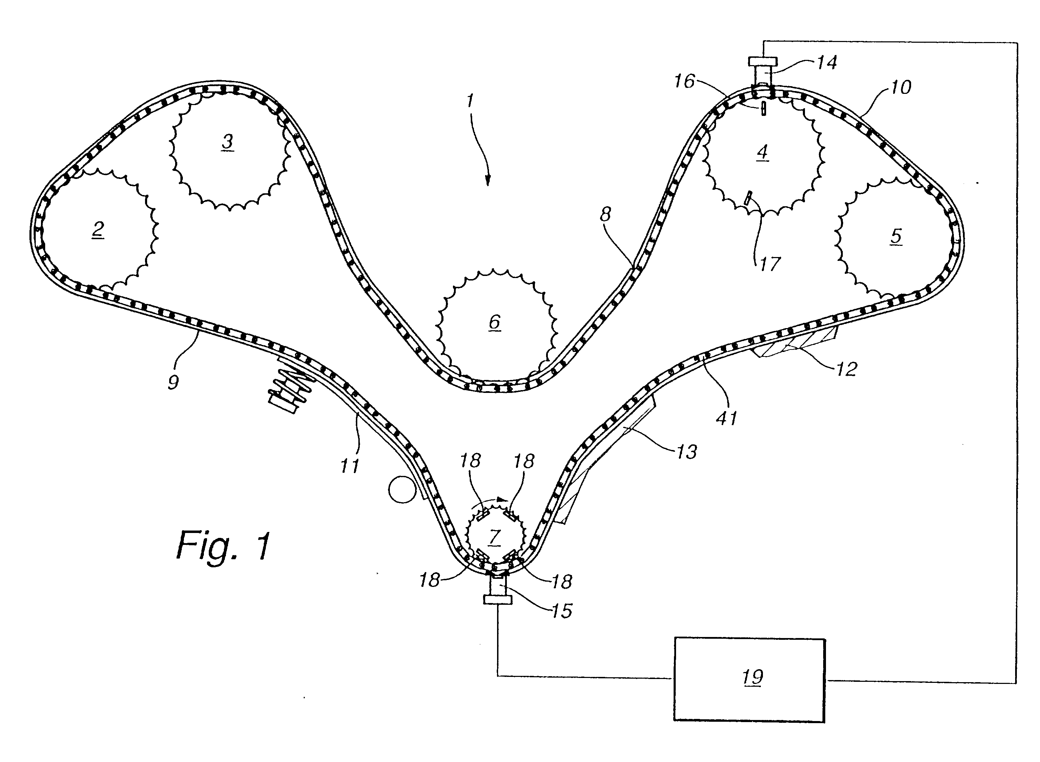

In Fig. 1 ist mit 1 ein Kettentrieb zur Motorsteuerung eines Kraftfahrzeugmotors dargestellt, der hier aus vier auf Nockenwellen angeordneten voneinander beabstandeten Kettenrädern 2,3,4.5, einem Umlenkrad 6 und einem auf der Kurbelwelle des Kraftfahrzeuges angeordneten, die anderen Kettenräder 2,3,4,5 antreibenden Kettenrad 7 und einer Steuerkette 8 besteht, die in die Verzahnungen der Kettenräder 2,3,4,5,6, und 7 eingreift.

Ausgehend vom Kettenrad 7 der Kurbelwelle, das geodätisch am tiefsten von allen gelegen ist, läuft die Steuerkette 8 in der Folge in Zugrichtung über die Kettenräder 2 und 3, dann das Umlenkrad 6 und schließlich über die Kettenräder 4 und 5, wonach sie wieder in das Kettenrad 7 einläuft. Die Kettenräder 3 und 4 sind die geodätisch höchst gelegenen Räder im Kettentrieb 1; die Kettenräder 2 und 5 sind von diesen seitlich nach außen versetzt und etwas tiefer angeordnet. Das Umlenkrad 6 ist wiederum tiefer als die Kettenräder 2,3,4,5 und geometrisch derart angeordnet, daß die Verbindungslinie durch sein und das Zentrum des Kettenrades 7 der Kurbelwelle eine Spiegelsymmetrieachse des Kettentriebes 1 bilden.

Der Abschnitt 9 der Steuerkette 8 zwischen der tiefsten Stelle des Umfangsbereiches des Kettenrades 7 und der höchsten Stelle des Umfangsbereiches des Kettenrades 4, auf welchem Abschnitt das Umlenkrad 6 liegt, bildet das Schlepptrum, der Abschnitt 10 der Steuerkette 8 zwischen der höchsten Stelle des Umfangsbereiches des Kettenrades 4 und der tiefsten Stelle des Umfangsbereiches des Kettenrades 7, auf welchem Abschnitt das Kettenrad 5 liegt, bildet das Zugtrum.

Auf Schlepptrumseite befindet sich zwischen dem Kettenrad 2 und dem Kettenrad 7 ein allgemein gebräuchlicher Kettenspanner 11. Auf Zugtrumseite wird die Steuerkette 8 zur Vermeidung von Schlingerbewegungen an zwei zwischen dem Kettenrad 7 und dem Kettenrad 5 liegenden Führungsschienen 12,13 entlanggeführt.

Der höchsten Stelle des Umfangsbereiches des Kettenrades 4 und der tiefsten Stelle des Umfangsbereiches des Kettenrades 7 gegenüber ist jeweils mit Abstand ein Sensor 14 und 15 angeordnet, die einen Teil einer Diagnoseeinrichtung zur Überwachung des Verschleißes der Steuerkette 8 hinsichtlich deren Längung darstellen. Der Sensor 14 wirkt mit zwei Markierungen 16,17 und der Sensor 15 mit vier Markierungen 18 zusammen, die auf dem Kettenrad 4 zum einen und auf dem Kettenrad 7 zum anderen stirnseitig angebracht sind.

Die Markierungen 16,17 und 18, die nahe der Umfangsfläche der Kettenräder 4 und 7 liegen und um einen bestimmten Drehwinkel voneinander versetzt angeordnet sind, sind als Magnetplättchen oder Magnetstifte ausgestaltet, die jeweils mit den Sensoren 14 und 15 induktiv signalauslösend zusammenwirken. In einfacher Ausführung können dazu die Markierungen 16,17 und 18 auch als Erhebungen oder Vertiefungen in der jeweiligen Stirnfläche der Kettenräder 4 bzw. 7 ausgebildet sein, die lediglich den Luftspalt zum jeweiligen Sensor hin verändern und dabei ebenfalls induktiv wirken. Zur Auslösung von je Umdrehung des Kettenrades 4 bzw. 7 regelmäßig wiederkehrenden Signalen kann sich meßtechnisch auch des Hall-Effektes bedient werden. Denkbar sind alternativ auch Markierungen, die auf optischem Wege pro Kettenradumdrehung erfaßt werden können.

In bauraumsparender und preiswerter Ausführung der Diagnoseeinrichtung werden die Sensoren 14 und 15 von an sich schon am Motor vorhandenen Positionsgeber gebildet, die die jeweilige Stellung der Kurbelwelle und der Nockenwellen erfassen, wonach über eine mit den Sensoren verbundene, signalverarbeitende Elektronik 19 die Zündzeitpunkte sowie die Ventilöffnungs- bzw. schließzeiten gesteuert werden.

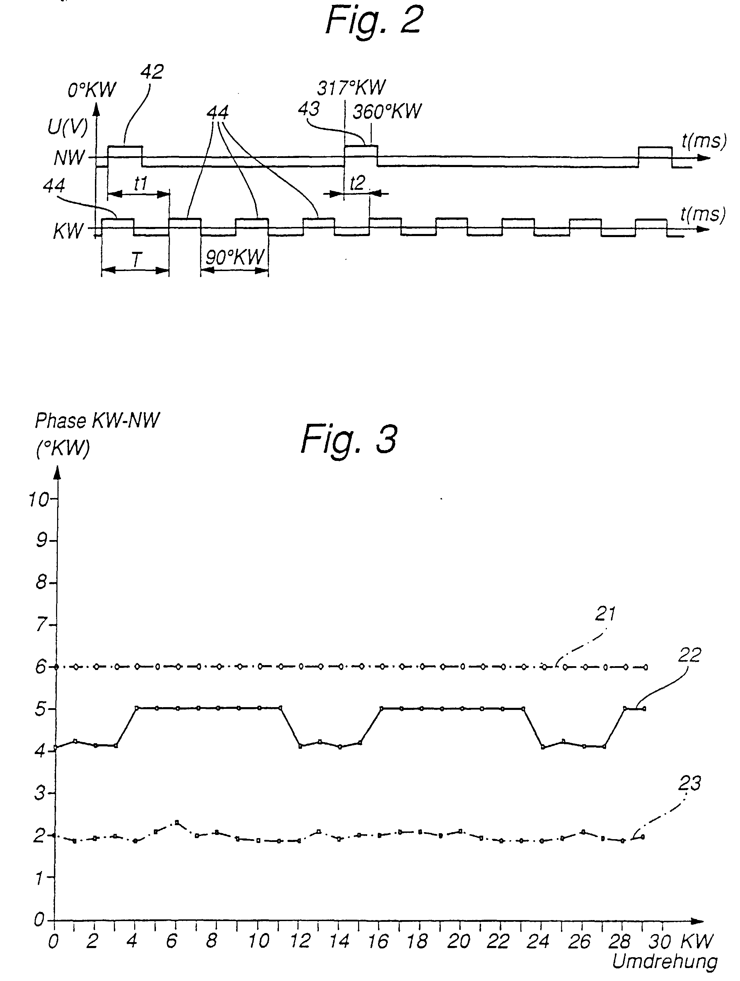

Im Motorbetrieb werden die Kettenräder 2,3,4,5,6 durch den Verzahnungseingriff mittels der Kette 8 vom Kettenrad 7 über die Kurbelwelle angetrieben. Jedes Mal, wenn eine der Markierungen 16,17 oder 18 den entsprechenden Sensor 14 bzw. 15 passiert, wird ein Spannungssignal 42, 43, 44 erzeugt. Die erzeugten Spannungssignale 42, 43, 44 werden, wie aus Fig. 2 ersichtlich ist, von einer Signalverarbeitungseinrichtung 40 der motorsteuernden Elektronik 19 - im folgenden kurz "Signalverarbeitung" genannt - für die Kettenräder 4,7 der Nockenwelle (NW) und der Kurbelwelle (KW) auf zwei verschiedenen Kanälen separat aufgenommen, wobei nach 360° Kurbelwinkel auf dem Kanal für die Signale des Kurbelwellenkettenrades 7 vier Signale 44 und auf dem Kanal für die Signale des Nockenwellenkettenrades 4 zwei Signale 42,43 erfaßt sind.

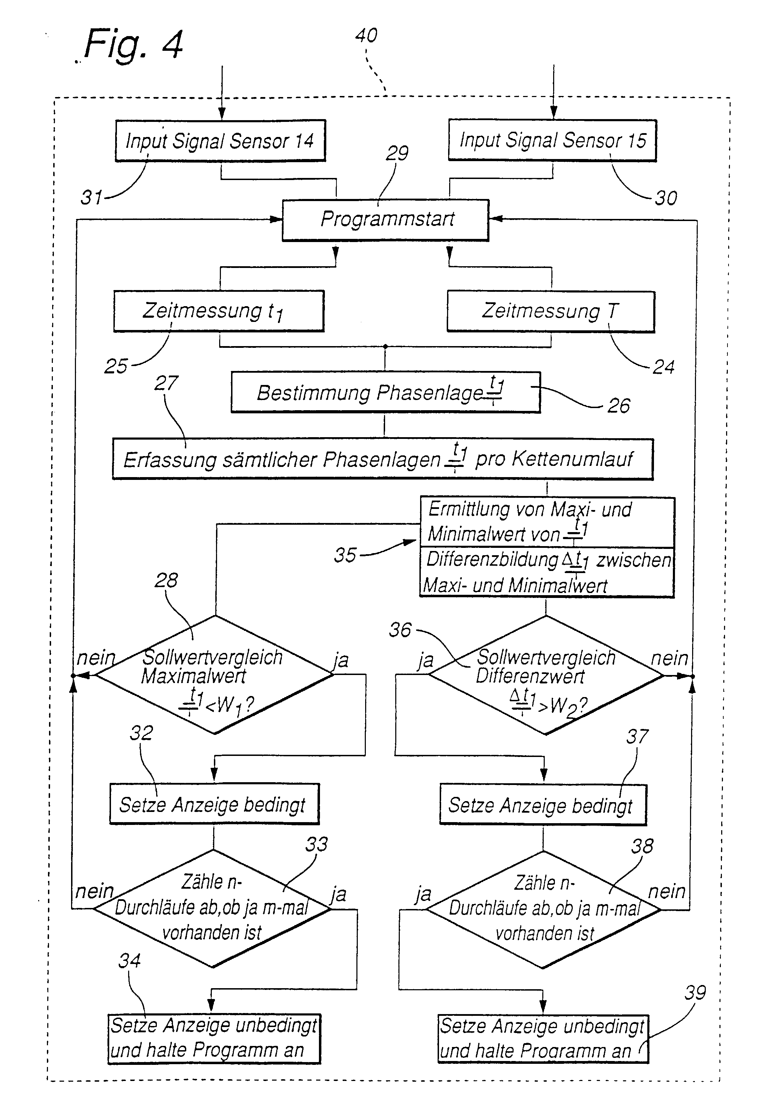

Die Signalverarbeitung 40 bildet dabei einen Teil der Diagnoseeinrichtung. Gemäß dem Diagnoseablaufplan nach Fig. 4 erfolgt der Programmstart 29 des Diagnoseprogramms stets von neuem nach Eintreffen eines Signales 42, 43 von einem der beiden Senoren 14,15, wenn nicht das Programm schon durch Erkennen eines unzulässigen Verschleißes gestoppt und eine Verschleißanzeige aktiviert ist.

Nach dem Signaleingang in der mit dem Sensor 15 verbundenen Signalaufnahme 30 der Signalverarbeitung 40 wird in deren Funktionsmodul 24 auf dem für die Signale vom Kettenrad 7 eingerichteten Kanal eine Zeitmessung zur Ermittelung der Periodendauer T des jeweils eingegangenen Signales 44 gestartet.

Etwa gleichzeitig erfolgt nach Signaleingang in der mit dem Sensor 14 verbundenen Signalaufnahme 31 der Signalverarbeitung 40 eines der Markierung 16 vom Kettenrad 4 zugeordneten Signales 42 im Funktionsmodul 25 der Signalverarbeitung 40 eine weitere Zeitmessung zur Ermittelung einer Zeit t₁, wobei diese Messung solange läuft, bis das zeitlich nächstfolgende, der Markierung 18 vom Kettenrad 7 entsprechende Signal 44 auf dem diesem zugeordneten Kanal eingeht. Der Anfangs- und Endzeitpunkt der sich bei nicht-unzulässig verschlissener Steuerkette 8 ständig wiederholenden Messung liegen jeweils an den ansteigenden Flanken der Signale 42 und 44 vom Kettenrad 4 und vom Kettenrad 7.

Mit jeder weiteren Markierung 17 erfolgen weitere Zeitmessungen t₂ im Funktionsmodul 25, die gegebenenfalls von t₁ unterschiedlich sind. Die Zeiträume t₁ bzw. t₂ sind ein Maß für die Phasenlage des Signales 42, 43 vom Kettenrad 4 der Nockenwelle zum Signal 44 vom Kettenrad 7 der Kurbelwelle. Nach der Zeitmessung wird im Funktionsmodul 26 der Signalverarbeitung 40 die Phasenlage der Signale 42,43 motordrehzahlunabhängig als Verhältnis der Zeiten t₁/T bzw. t₂/T bestimmt. Die Zeiträume t₁, t₂ liegen jeweils in einer Periodendauer T, wobei diese für die einzelnen Zeiträume aufgrund der ungleichmäßig sich umdrehenden Kurbelwelle unterschiedlich sein kann. Jedem Zeitraum t₁, t₂ ist dadurch eine bestimmte, nur für ihn geltende Periodendauer T zugeordnet. Pro Kettenumlauf werden nun im Funktionsmodul 27 der Signalverarbeitung 40 sämtliche Werte der Phasenlagen t₁/T bzw. t₂/T erfaßt. In einem Funktionsmodul 35 der Signalverarbeitung 40 werden dann von der Elektronik der Motorsteuerung 19 zum einen der Maximal- und der Minimalwert aus der Wertefolge der Phasenlagen t₁/T pro Kettenumlauf ermittelt und zum anderen die Differenz Δ t₁/T zwischen diesen Extremwerten gebildet. Die Erfassung der Werte aller Phasenlagen kann sich bei anderen Motoren und somit anderen Kettentriebgeometrien und -konzeptionen von einem Kettenumlauf auch auf mehrere Kettenumläufe erstrecken.

Zeigt sich der Verschleiß an der Steuerkette 8 in einer Längung, wird das Zugmoment des antreibenden Kettenrades 7 auf das Kettenrad 4 beim Einlaufen der Kette 8 in den Abschnitt des Zugtrums momentan kleiner. Das hat zur Folge, daß das angetriebene Kettenrad 4 langsamer läuft als beim Durchlauf eines ungelängten Kettenabschnittes, bis die erforderliche Strammheit des Zugtrums wieder eingetreten ist. Die Markierungen 16 und 17, die durch das Langsamerlaufen des Kettenrades 4 relativ zum Kettenrad 7 um einen Drehwinkel in der Drehrichtung zurück verschoben sind, gelangen dadurch zeitlich versetzt etwas später am Sensor 14 vorbei, so daß sich der Zeitpunkt des Eingangs des Signals 42, 43 gegen später verschiebt. Dies drückt sich jedoch in einer Verkürzung der Zeit t₁ bzw. t₂ aus, wobei sich die Phasenlage der Signale 42, 43 zu kleineren Grad Kurbelwinkel hin verschiebt.

Die neue Phasenlage der Signale 42, 43 währt solange, bis der gelängte Kettenabschnitt aus dem Zugtrum ins Schlepptrum herausgelaufen ist. In diesem Moment dreht das verlangsamt laufende Kettenrad 4 wieder schneller bis der Normallauf der Kette 8 erreicht ist. Dabei "wandern" die Markierungen 16,17 an ihre ursprüngliche Relativposition, wobei die Zeit t₁ bzw. t₂ wieder länger wird. Es erfolgt somit eine Phasenlagenverschiebung der Signale 42, 43 zurück in ihre ursprüngliche Phasenlage zueinander zu höheren Grad Kurbelwinkel.

Ist die Steuerkette 8 über ihren gesamten Umfang gleichmäßig gelängt, so wird keine Rückkehr der Markierungen 16,17 in ihre ursprüngliche Relativlage erfolgen. Es ergibt sich über die Lebensdauer der Steuerkette 8 hinweg eine kontinuierliche Verschiebung der Phasenlage der Signale.

Beim oben beschriebenen Rücksprung der Phasenlage liegt ein Verschleiß eines Kettenabschnittes oder ein Schaden eines einzelnen Kettengliedes 41 vor. Beispielhaft ist dies in Fig. 3 gezeigt, wobei die Phasenlage einer theoretisch idealen, also in optimalem Zustand befindlichen Kette 8 pro Kurbelwellenumdrehung über mehr als zwei Kettendurchläufe hinweg in einer geradlinigen Kurve 21 aufgenommen ist.

Im Realzustand ist die Kette 8 gesamtheitlich etwas, jedoch zulässig gelängt, wodurch t₁ bzw. t₂ etwas kürzer werden und sich somit eine kleine Phasenlagendifferenz der Signale 42, 43 im Vergleich zur idealen Kette ergibt. Bei einem zusätzlichen Einzelgliedschaden zeigt sich in der Kurve 22 der oben beschriebene Sprungcharakter der Phasenlage (hierbei wird von einem Kettenrad 4 ohne Markierung 17 ausgegangen). Das fehlerhafte Kettenglied 41 ist dabei - zeitlich gesehen - vier Kurbelwellenumdrehungen lang, d.h. bei vier Meßpunkten, innerhalb des Zugtrums. Die Kurve 23 offenbart den Verlauf der Phasenlage der Signale 42 bei extrem stark gelängter Steuerkette 8 ohne Einzelgliedschaden, wobei die Phasen der Signale 42 und der Signale 44 bis auf etwa 2° Kurbelwinkel voneinander versetzt sind.

Zur aktiven Überwachung des Verschleißes der Steuerkette 8 erfolgt - sich anschließend an den Funktionsmodul 35 - im Funktionsmodul 28 der Signalverarbeitung 40 ein Vergleich zwischen einem Maximalwert von t₁/T und einem vorgegebenen abgespeicherten Sollwert W₁. Ist der Sollwert größer als der Maximalwert, dann liegt ein Anzeichen eines unzulässigen Verschleißes hinsichtlich einer gesamtheitlichen gleichmäßigen Kettenlängung vor.

Vom Funktionsmodul 28 der Signalverarbeitung 40 wird dann ein Signal an einen weiteren Funktionsmodul 32 abgegeben, der eine Anzeige im Fahrgastraum über einen Signalgeber vorbereitet, die für den Fahrgast eindeutig erkennbar ist. Vom Funktionsmodul 32 der Signalverarbeitung 40 aus geht ein Signal an einen Funktionsmodul 33, der zur Vermeidung von Falschanzeigen durch einen Signalfehler n-Durchläufe, d.h. n-Sollwertvergleiche abzählt und überprüft, ob das Anzeichen eines unzulässigen Verschleißes in ausreichender Häufigkeit (m-mal) vorhanden ist. Wenn dies zutrifft, wird ein Signal an einen Funktionsmodul 34 der Signalverarbeitung 40 abgegeben, der die Anzeige über den Signalgeber unbedingt setzt und das Meßprogramm stoppt. Die Anzeige kann beispielsweise ein akustisches Signal oder das Blinken einer kleinen Lampe in der Armaturentafel sein.

Entspricht der Maximalwert von t₁/T dem Sollwert oder wird das Anzeichen des Verschleißes mit unzureichender Häufigkeit, also kleiner als m-mal registriert, bleibt die Anzeige inaktiv und das Programm wird erneut gestartet.

Parallel zum Sollwertvergleich im Funktionsmodul 28 wird in einem Funktionsmodul 36 der Differenzwert Δt₁/T mit einem Sollwert W₂ verglichen. Ist der Differenzwert größer als der Sollwert W₂, wird ein Signal an einen Funktionsmodul 37 abgegeben, der ähnlich dem Funktionsmodul 32 eine Anzeige im Fahrgastraum über einen Signalgeber vorbereitet, die einen Einzelgliedschaden an der Steuerkette 8 melden soll. Zweckgleich dem Funktionsmodul 33 werden in einem Funktionsmodul 38 n-Durchläufe an Differenzbildung abgezählt und überprüft, ob der gegenüber dem Sollwert W₂ größere Differenzwert m-mal vorhanden ist. Ist dies der Fall, wird ein Signal an einen Funktionsmodul 39 der Signalverarbeitung 40 abgegeben, der über den Signalgeber die Anzeige unbedingt setzt und das Meßprogramm stoppt.

Ist der Sollwert W₂ größer oder ist der Differenzwert weniger als - wie vorgegeben - m-mal aufgefunden worden, bleibt die Anzeige inaktiv und das Programm wird neu gestartet. Die Anzeige für den Einzelgliedschaden ist von der Anzeige für gleichmäßige Längung der Steuerkette 8 zwar an verschiedener Stelle angeordnet, kann jedoch hinsichtlich der Art und Ausbildung mit dieser identisch sein. Die beschriebene Diagnoseeinrichtung ist durch ihre Gestaltung selbstdiagnostizierend.

Im übrigen ist es denkbar, nach einer erfolgter Anzeige ein "reset" im Programm vorzusehen, das die jeweilige Anzeige nach Verschleißankündigung zurücksetzt. Desweiteren ist es denkbar, das Programm so zu gestalten, daß bei erfolgter Anzeige eines der Verschleißmöglichkeiten der Programmablauf nur zu dem Ausmaß weiterläuft, wie es zur Anzeige des jeweils anderen noch nicht eingetretenen und deshalb noch nicht angezeigten unzulässigen Verschleißes bei einem späteren Vorliegen notwendig ist. Alternativ dazu, daß das verschleißausweisende Signal zur Anzeige gebracht wird, kann auch dieses einfach in einem elektronischen Speicher abgelegt werden, der bei einem späteren Kundendienstbesuch vom Service abgerufen wird. Der Service hat dabei die Möglichkeit, in einfacher Weise und mit geringem Aufwand den Zustand der Motorsteuerkette 8 zu beurteilen und diese bei zu starkem Verschleiß auszuwechseln.

Insgesamt erhält man mittels der Diagnoseeinrichtung bzw. aufgrund des Verfahrens einfach auswertbare Signale ohne überlagertes Signalrauschen und einfache Weiterverarbeitung der Signale durch bloße Kurzzeitmessung zwischen beispielsweise zwei eindeutigen Zeitmarken und durch bloße Differenzbildung der aus der Kurzzeitmessung resultierenden Werte.

Läuft ein geschädigtes Einzelglied 41 in das Zugtrum ein, so kann ein Einzelgliedverschleiß in der Regel nur dann erkannt werden, wenn das Einzelglied 41 sich auf einer freien Strecke zwischen den Kettenrädern befindet. Läuft die Kette auf der Zugtrumstrecke an einem weiteren Kettenrad entlang, so wird das geschädigte Einzelglied 41 bei Passieren in dessen Verzahnung gedrückt, wobei die Längung ausgeglichen wird, so daß in diesem Moment eine Situation für das Einzelglied 41 eintritt, die dem Herauslaufen aus dem Zugtrum gleicht. In diesem Moment kann ein Verschleiß durch eine Messung nicht identifiziert werden, da die Kettenräder 4 bzw. 5 kurzfristig schneller drehen und somit die Markierungen 16,17 ihre ursprüngliche Position, die einer unverschlissenen Kette 8 ohne Einzelgliedschaden entspricht, einnehmen.

Um eine hohe Wahrscheinlichkeit des Auffindens eines solchen Verschleißes zu erhalten, ist es dabei vorteilhaft, möglichst wenig Kettenräder auf der Strecke des Zugtrums zwischen dem Kettenrad 4 und dem Kettenrad 7 anzuordnen. Wenn nämlich das defekte Kettenglied 41 sich auf einer freien Strecke befindet, dann wird die Länge der Kette 8 bestimmt durch die Summe der Länge der Einzelglieder, auf dem Kettenrad hingegen durch die Teilung seiner Verzahnung. Diese Teilung macht den Kettenfehler für eine Messung dann unwirksam.

Um diesen Kettenfehler überhaupt detektieren zu können, sollte möglichst die Anzahl der Kettenglieder im Zugtrum zwischen den beiden unmittelbar benachbarten Kettenrädern größer sein als die Zahnzahl des angetriebenen Rades, da das defekte Kettenglied auf jeden Fall zumindest einmal pro Kettenumlauf sich auf einer Freistrecke des Zugtrums befindet. Die Zahnzahl ist hier definiert als die Anzahl der Zähne des angetriebenen Kettenrades, die zwischen zwei Meßpunkten bzw. den zugehörigen Markierungen am Kettenrad liegen.

Für den Fall, daß die Anzahl der Kettenglieder kleiner ist als die Zahnzahl und bei geradzahligem Verhältnis von der Kettenradzahnzahl zur Anzahl aller Kettenglieder der Steuerkette 8, ist es denkbar, daß das defekte Kettenglied nicht bei einer Messung erfaßt wird, da es immer mindestens ein Kettenglied gibt, das immer zum Zeitpunkt der Messung bei jedem Kettenumlauf außerhalb der Freistrecke liegt, auf der die Messung erfolgt.

Bei einer entsprechenden Kettentriebgeometrie hinsichtlich dessen, daß die Anzahl der Kettenglieder kleiner ist als die Zahnzahl, ist es daher notwenig, das Verhältnis zwischen der Zahnzahl des angetriebenen Kettenrades und der Summe aller Kettenglieder ungeadzahlig zu wählen, beispielsweise durch eine geeignete örtliche Anbringung der Markierungen oder durch abgestimmte Ausbildung der Kettenradverzahnung. Dadurch läuft jedes Kettenglied nach einer bestimmten Anzahl von Kettenumläufen in die Freistrecke hinein und befindet sich dort zum Zeitpunkt zumindest einer Messung. Ein Einzelgliedschaden kann somit dadurch erfaßt werden.

Gleichfalls kann dies durch Anbringen einer Vielzahl von beabstandeten Markierungen erreicht werden, wobei eine höhere Auflösung bei der Messung erzielt und dadurch sich eine höhere Wahrscheinlichkeit ergibt, einen Einzeldefekt zu finden. Gleichzeitig muß jedoch die Unterscheidbarkeit der Signale voneinander gewährleistet sein, wobei verhindert werden sollte, daß bei einem durch eine Kettenlängung bedingten Nachlaufen des angetriebenen Kettenrades infolge eines zu engen Markierungsabstandes Fehlersignale von regulären Signalen - Signalen also, die keinen Kettenverschleiß melden - ersetzt werden. Somit ist die Wahl eines geeigneten Abstandes zwischen den Markierungen erforderlich. Alternativ ist es dazu denkbar, nicht gleichartige Markierungen am Kettenrad anzubringen, sondern voneinander verschieden gestaltete daran vorzusehen, wodurch sich andersartige und daher unterscheidbare Signale auch bei eng aneinander liegenden Markierungen ergeben.

Alternativ zum oben beschriebenen Ausführungsbeispiel kann hinsichtlich der Signalverarbeitung nach der Erfassung der Phasenlagen pro mindestens eines Kettenumlaufes auch eine Mustererkennung nachgeschaltet sein, die das Verlaufsmuster der Ist-Wertefolge der Phasenlagen pro Kurbelwellenumdrehung (Fig. 3) mit einem vorgegebenen und gegebenenfalls in einem elektronischen Speicher der Signalverarbeitung 40 abgespeicherten Muster der Phasenlagen vergleicht. Das vorgegebene Muster entspricht einem Verschleißgrad und einer Verschleißart, so daß bei periodisch wiederkehrender Entsprechung von vorgegebenem Muster und Ist-Wertefolgemuster im Vergleich ein Signal ausgegeben werden kann, das - gemäß dem jeweiligen vorgegebenen Muster - einem bestimmten Verschleißgrad und -art zuordenbar ist. Somit kann mit dieser Signalverarbeitung und -auswertung nicht nur auf die Qualität des Verschleißes, also auf Einzelgliedverschleiß oder Gesamtkettenlängung geschlossen werden, sondern auch auf den Verschleißzustand, d.h. die Stärke des Verschleißes. Dazu sind in einem elektronischen Speicher der Signalverarbeitung 40 eine Vielzahl von vorgegebenen Mustern speicherbar, die zum Vergleich mit dem Muster der Ist-Wertefolge herangezogen werden können. Hier ist auch in relativ einfacher Weise möglich, auch mehrere Einzelgliedschäden in einer Steuerkette 8 zu detektieren.

In der Praxis verschiebt sich das Niveau der Phasenlage bei Drehzahl- und Laständerung infolge der Änderung der Dehnung der Kette 8 durch das sich ändernde Zugmoment infolge einer Veränderung des Gleitschienenbogens. Zudem nimmt die Motortemperatur Einfluß auf die Dehnung der Steuerkette 8. Anhand eines Vergleiches der Meßwerte mit Werten eines elektronisch gespeicherten Sollwert-Kennfeldes, die in Abhängigkeit von den momentan jeweils vorliegenden Betriebsparametern abgerufen werden, können diese Verschiebungen der Phasenlage rechnerisch kompensiert werden, so daß zur Auswertung Signale vorhanden sind, die eine eindeutige Aussage zulassen, ob ein Kettenschaden bzw. -verschleiß hinsichtlich einer Längung der Kette 8 vorliegt.

Die Überwachung des Verschleißes mit der erfindungsgemäßen Diagnoseeinrichtung kann permanent, also über den gesamten Last- und Drehzahlbereich während des Motor- und/oder Fahrbetriebes erfolgen. Denkbar wäre es, in einfacher Weise ohne zusätzlichen Vergleich der Phasenlagenwerte mit einem Kennfeld nur bei konstanten Motorbedingungen, insbesonder in Leerlaufphasen den Verschleiß der Steuerkette 8 zu überwachen.

## Patentansprüche

1. Verfahren zur Überwachung des Verschleißes zumindest einer Motorsteuerkette, insbesondere einer Steuerkette eines Kraftfahrzeugmotors, bei welchem an einem Kettenrad des Kettentriebes Signale bezüglich des Kettenlaufes aufgenommen werden, die mit einem vorgegebenen Sollwert verglichen werden, wobei bei Abweichung von diesem ein Verschleiß der Steuerkette hinsichtlich einer unzulässigen Längung dieser Kette erkannt wird,
**dadurch gekennzeichnet**,
daß im Motorbetrieb die relative Phasenlage der Signale (42,43,44) zweier bordeigener, die Winkelstellung verschiedener Kettenräder (4,7) zueinander erfassender motorintegrierter Sensoren (14,15), die sich an unterschiedlichen Kettenrädern (4,7) des Steuerkettentriebes (1) befinden, ermittelt und dann mit einem vorgegebenen Sollwert (W₁) verglichen wird, wonach bei Abweichung des aktuellen Ist-Phasenlagenwertes von diesem ein eine unzulässige Längung der Steuerkette (8) ausweisendes Signal ausgegeben wird, wobei bei permanenter Abweichung der Ist-Phasenlage vom Sollwert (W₁) während eines Steuerkettenumlaufes ein Signal ausgegeben wird, das eine annähernd gleichmäßige und dadurch einen unzulässig starken Gesamtkettenverschleiß angebende Längung der Steuerkette (8) ausweist.

2. Verfahren nach dem Oberbegriff von Anspruch 1,
**dadurch gekennzeichnet,**
daß im Motorbetrieb die relative Phasenlage der Signale (42,43,44) zweier bordeigener, die Winkelstellung verschiedener Kettenräder (4,7) zueinander erfassender motorintegrierter Sensoren (14,15), die sich an unterschiedlichen Kettenrädern (4,7) des Steuerkettentriebes (1) befinden, ermittelt und dann mit einem vorgegebenen Sollwert (W₂) verglichen wird, wonach bei Abweichung des aktuellen Ist-Phasenlagenwertes von diesem ein eine unzulässige Längung der Steuerkette (8) ausweisendes Signal ausgegeben wird, wobei bei einem singulären oder mehrfachen, jedoch nicht permanenten Auftreten einer Abweichung der Ist-Phasenlage vom Sollwert (W₂) während eines Steuerkettenumlaufes ein Signal für eine unzulässige Längung der Steuerkette (8) hinsichtlich eines Einzelgliedschadens ausgegeben wird.

3. Verfahren nach dem Oberbegriff von Anspruch 1,
**dadurch gekennzeichnet,**
daß im Motorbetrieb sämtliche relativen Phasenlagen der Signale (42,43,44) zweier bordeigener, die Winkelstellung verschiedener Kettenräder (4,7) zueinander erfassender motorintegrierter Sensoren (14,15), die sich an unterschiedlichen Kettenrädern (4,7) des Steuerkettentriebes (1) befinden, immer wieder erneut innerhalb mindestens eines Kettenumlaufes in einer Wertfolge ermittelt werden, die dann mit einem vorgegebenen Sollwert (W₁) verglichen wird, wobei ein annähernd permanentes Unterschreiten der Werte unter den Sollwert (W₁) als Signal für einen unzulässig starken Gesamtkettenverschleiß gewertet wird, das eine unzulässige Längung der Steuerkette (8) ausweisend ausgegeben wird.

4. Verfahren nach dem Oberbegriff von Anspruch 1,
**dadurch gekennzeichnet,**
daß im Motorbetrieb sämtliche relativen Phasenlagen der Signale (42,43,44) zweier bordeigener, die Winkelstellung verschiedener Kettenräder (4,7) zueinander erfassender motorintegrierter Sensoren (14,15), die sich an unterschiedlichen Kettenrädern (4,7) des Steuerkettentriebes (1) befinden, immer wieder erneut innerhalb mindestens eines Kettenumlaufes in einer Wertfolge ermittelt werden, aus der ein Maximal- und ein Minimalwert ermittelt und die Differenz zwischen beiden Werten gebildet wird, wonach die Differenz mit einem Sollwert (W₂) verglichen wird, wobei ein Überschreiten der Differenz über diesen Sollwert (W₂) als Signal für einen unzulässig starken Einzelgliedverschleiß gewertet wird, das eine unzulässige Längung der Steuerkette (8) ausweisend ausgegeben wird.

5. Verfahren nach dem Oberbegriff von Anspruch 1,
**dadurch gekennzeichnet,**
daß im Motorbetrieb sämtliche relativen Phasenlagen der Signale (42,43,44) zweier bordeigener, die Winkelstellung verschiedener Kettenräder (4,7) zueinander erfassender motorintegrierter Sensoren (14,15), die sich an unterschiedlichen Kettenrädern (4,7) des Steuerkettentriebes (1) befinden, immer wieder erneut innerhalb mindestens eines Kettenumlaufes in einer Wertfolge ermittelt werden, welche mit einem vorgegebenen, einen bestimmten Verschleißzustand der Steuerkette (8) bezeichnenden Wertfolgemuster verglichen wird, wonach bei einer periodisch wiederkehrenden Entsprechung von Wertfolge und Muster ein - gemäß dem im Muster enthaltenen Verschleißzustand - die Art und/oder den Grad des Verschleißes der Steuerkette (8) ausweisendes Signal ausgegeben wird.

6. Verfahren nach Anspruch 5,
**dadurch gekennzeichnet,**
daß die Wertfolge elektronisch gespeichert wird und mit dem in einem elektronischen Speicher abgelegten Wertfolgemuster verglichen wird.

7. Verfahren nach einem der Ansprüche 1 bis 6,
**dadurch gekennzeichnet,**
daß die Phasenlage im Motorbetrieb motordrehzahlunabhängig ermittelt wird, wobei eine motordrehzahlabhängige Zeit t₁, t₂ zwischen dem Eingang eines vom am Kettenrad (4) der Nockenwelle angeordneten Sensor (14) ausgelösten Signales (42, bzw. 43) und einem unmittelbar darauffolgenden vom am Kettenrad (7) der Kurbelwelle angeordneten Sensor (15) ausgelösten Signal (44) sowie eine motordrehzahlabhängige Periodendauer T eines Signales (44) vom Sensor (15), in der der jeweilige Meßzeitraum t₁, t₂ liegt, gemessen werden und dann das Verhältnis von t₁, t₂ zur jeweils zugehörigen Periodendauer T gebildet wird, dessen Wert die jeweilige Phasenlage angibt.

8. Verfahren nach einem der Ansprüche 1 bis 7,
**dadurch gekennzeichnet,**
daß die relative Phasenlage der Signale (42,43,44) laufend ermittelt wird.

9. Verfahren nach einem der Ansprüche 1 bis 7,
**dadurch gekennzeichnet,**
daß die relative Phasenlage der Signale (42,43,44) lediglich bei konstanten Motorbetriebsbedingungen ermittelt wird.

10. Verfahren nach einem der Ansprüche 1 bis 9,
**dadurch gekennzeichnet,**
daß als Sensoren (14,15) an sich schon bekannte, am Motor vorhandene Positionsgeber zur Ermittelung der Stellung der Kurbelwelle und einer Nockenwelle verwendet werden.

11. Verfahren nach einem der Ansprüche 1 oder 2,
**dadurch gekennzeichnet,**
daß das bei Abweichung des aktuellen Ist-Phasenlagenwertes von diesem eine unzulässige Längung der Steuerkette (8) ausweisende Signal zur Anzeige gebracht wird.

12. Verfahren nach einem der Ansprüche 1 oder 2,
**dadurch gekennzeichnet,**
daß das bei Abweichung des aktuellen Ist-Phasenlagenwertes von diesem eine unzulässige Längung der Steuerkette (8) ausweisende Signal in einem elektronischen Speicher abgelegt wird.

13. Verwendung einer Diagnoseeinrichtung zur Überwachung des Verschleißes zumindest einer Motorsteuerkette, insbesondere einer Steuerkette (8) eines Kraftfahrzeugmotors, die von einer Kurbelwelle aus wenigstens eine Nockenwelle antreibt und im Verlauf des Kettentriebes (1) in die Verzahnung von wenigstens zwei voneinander beabstandeten Kettenrädern (2,3,4,5,6,7) eingreift, mit einem Sensor (14,15), der an einem Kettenrad (4,7) positioniert ist und mit einer Signalverarbeitungseinrichtung (40), an die der Sensor (14,15) im Zusammenspiel mit dem Kettentrieb (1) Signale (42,43,44) abgibt, wobei die Signalverarbeitungseinrichtung (40) die Signale (42,43,44) mit einem Sollwertsignal vergleicht und bei Abweichung von diesem ein einem nicht tolerierbaren Verschleiß der genannten Steuerkette (8) hinsichtlich einer unzulässigen Längung entsprechendes Signal ausgibt, insbesondere zur Durchführung des Verfahrens nach einem der Ansprüche 1 bis 12, wobei die motorintegrierte Diagnoseeinrichtung bordeigen den Verschleiß der Steuerkette (8) im Motorbetrieb - bezogen auf den Kettentrieb (1) - berührungslos überwacht, daß die Diagnoseeinrichtung zwei Sensoren (14,15) beinhaltet, die an unterschiedlichen Kettenrädern (4,7) angeordnet sind, wobei an den Kettenrädern (4,7) jeweils wenigstens eine Markierung (16,17,18) angebracht ist, die dem zugehörigen Sensor (14,15) wenigstens einmal pro Umdrehung des jeweiligen Kettenrades (4,7) ein die Winkelstellung der Kettenräder (4,7) zueinander repräsentierendes Signal (42,43,44) auslöst, wobei die Signalverarbeitungseinrichtung (40) neben einer Signalaufnahme (30,31) eine Erfassung (24,25,26,27) der Phasenlage der aufgenommenen Sensorsignale (42,43,44) zueinander und einen Sollwertvergleich (28,36) bezüglich der Phasenlage sowie einen Signalgeber beinhaltet, der bei einer Abweichung der Phasenlage vom vorgegebenen Sollwert (W₁, W₂) ein eine Längung der Steuerkette (8) ausweisendes Signal ausgibt und wobei in die Signalverarbeitungseinrichtung (40) ein Funktionsmodul (35) integriert ist, das zum einen den Maximal- und den Minimalwert aus einer in der Erfassung (24,25,26,27) pro mindestens einem Kettenumlauf aufgenommenen Wertefolge aller Phasenlagen ermittelt und zum anderen jeweils pro Wertefolge von neuem die Differenz zwischen dem Maximal- und dem Minimalwert bildet.

14. Verwendung einer Diagnoseeinrichtung nach Anspruch 13,
**dadurch gekennzeichnet,**
daß der Sollwertvergleich (36) den Differenzwert mit einem Sollwert (W₂) zur Beurteilung eines etwaigen Einzelgliedschadens vergleicht.

15. Verwendung einer Diagnoseeinrichtung nach Anspruch 13,
**dadurch gekennzeichnet,**
daß der Sollwertvergleich (28) den Maximalwert mit einem Sollwert (W₁) zur Beurteilung eines etwaigen, unzulässig starken Gesamtkettenverschleißes vergleicht.

16. Verwendung einer Diagnoseeinrichtung zur Überwachung des Verschleißes zumindest einer Motorsteuerkette, insbesondere einer Steuerkette (8) eines Kraftfahrzeugmotors, die von einer Kurbelwelle aus wenigstens eine Nockenwelle antreibt und im Verlauf des Kettentriebes (1) in die Verzahnung von wenigstens zwei voneinander beabstandeten Kettenrädern (2,3,4,5,6,7) eingreift, mit einem Sensor (14,15), der an einem Kettenrad (4,7) positioniert ist und mit einer Signalverarbeitungseinrichtung (40), an die der Sensor (14,15) im Zusammenspiel mit dem Kettentrieb (1) Signale (42,43,44) abgibt, wobei die Signalverarbeitungseinrichtung (40) die Signale (42,43,44) mit einem Sollwertsignal vergleicht und bei Abweichung von diesem ein einem nicht tolerierbaren Verschleiß der genannten Steuerkette (8) hinsichtlich einer unzulässigen Längung entsprechendes Signal ausgibt, insbesondere zur Durchführung des Verfahrens nach einem der Ansprüche 1 bis 12, wobei die motorintegrierte Diagnoseeinrichtung bordeigen den Verschleiß der Steuerkette (8) im Motorbetrieb - bezogen auf den Kettentrieb (1) - berührungslos überwacht, daß die Diagnoseeinrichtung zwei Sensoren (14,15) beinhaltet, die an unterschiedlichen Kettenrädern (4,7) angeordnet sind, wobei an den Kettenrädern (4,7) jeweils wenigstens eine Markierung (16,17,18) angebracht ist, die dem zugehörigen Sensor (14,15) wenigstens einmal pro Umdrehung des jeweiligen Kettenrades (4,7) ein die Winkelstellung der Kettenräder (4,7) zueinander repräsentierendes Signal (42,43,44) auslöst, wobei die Signalverarbeitungseinrichtung (40) neben einer Signalaufnahme (30,31) eine Erfassung (24,25,26,27) der Phasenlage der aufgenommenen Sensorsignale (42,43,44) zueinander und einen Sollwertvergleich (28,36) bezüglich der Phasenlage sowie einen Signalgeber beinhaltet, der bei einer Abweichung der Phasenlage vom vorgegebenen Sollwert (W₁, W₂) ein eine Längung der Steuerkette (8) ausweisendes Signal ausgibt und wobei die Signalverarbeitungseinrichtung (40) eine Mustererkennung enthält, die die in der Erfassung ermittelte Wertefolge der Phasenlagen mit einem vorgegebenen, einen bestimmten Verschleißzustand der Steuerkette (8) bezeichnenden Wertfolgemuster vergleicht und bei einer periodisch wiederkehrenden Entsprechung von Wertfolge und Muster ein - gemäß dem im Muster enthaltenen Verschleißzustand - die Art und/oder den Grad des Verschleißes der Steuerkette (8) ausweisendes Signal ausgibt.

17. Verwendung einer Diagnoseeinrichtung nach Anspruch 16,
**dadurch gekennzeichnet,**
daß die Signalverarbeitungseinrichtung (40) eine elektronische Speichereinheit beinhaltet, in der das Wertfolgemuster gespeichert ist, und daß die jeweils ermittelte Wertfolge der Phasenlagen zum Vergleich mit dem Muster ebenfalls in einem elektronischen Speicher abspeichbar ist.

18. Verwendung einer Diagnoseeinrichtung nach einem der Ansprüche 13 bis 17,
**dadurch gekennzeichnet,**
daß die Markierungen (16,17,18) an den Kettenrädern (4,7) stirnseitig angebracht sind.

19. Verwendung einer Diagnoseeinrichtung nach einem der Ansprüche 13 bis 18,
**dadurch gekennzeichnet,**
daß die Sensoren (14,15) an sich schon bekannte, am Motor vorhandene Positionsgeber zur Ermittelung der Stellung der Kurbelwelle und einer Nockenwelle sind.

20. Verwendung einer Diagnoseeinrichtung nach einem der Ansprüche 13 bis 19,
**dadurch gekennzeichnet,**
daß die Markierungen (16,17,18) durch einen vom jeweiligen Kettenrad (4,7) abragenden Stift aus magnetisierbarem Werkstoff gestaltet sind, und daß die Sensoren (14,15) jeweils durch einen ortsfest angeordneten Induktionsgeber gebildet sind, der in geringem Abstand zu dem vom Stift beschriebenen Bewegungskreis gehalten ist und der beim Vorbeilauf des Stiftes ein eindeutiges elektronisch datenverarbeitbares Signal (42,43,44) liefert.

21. Verwendung einer Diagnoseeinrichtung nach einem der Ansprüche 13 bis 20,
**dadurch gekennzeichnet,**
daß die Diagnoseeinrichtung eine Anzeige beinhaltet, die zur äußerlichen Erkennung eines unzulässigen Steuerkettenverschleißes vom Signalgeber über das eine Längung der Steuerkette (8) ausweisende Signal aktivierbar ist.

22. Verwendung einer Diagnoseeinrichtung nach einem der Ansprüche 13 bis 21,
**dadurch gekennzeichnet,**
daß die Signalverarbeitungseinrichtung (40) einen elektronischen Speicher enthält, in dem das vom Signalgeber ausgegebene, eine Längung der Steuerkette (8) ausweisende Signal ablegbar ist.

23. Verwendung einer Diagnoseeinrichtung nach einem der Ansprüche 13 bis 22,
**dadurch gekennzeichnet,**
daß an den Kettenrädern (4,7) eine Vielzahl von eng voneinander beabstandeten Markierungen angebracht sind, die derart ausgestaltet sind, daß die im Zusammenwirken mit dem Sensor (14,15) erzeugten Signale unterscheidbar sind.

## Claims

1. A method of monitoring wear on at least one engine timing chain, in particular a timing chain of a motor vehicle engine, wherein signals relating to the path of the chain are detected on a sprocket wheel of the chain drive and compared with a predetermined desired value, a deviation therefrom indicating that there is wear on the timing chain in terms of a lengthening of this chain,
**characterised in that**
when the engine is running, the relative phase position of the signals (42, 43, 44) of two on-board sensors (14, 15) integrated in the engine detecting the angular position of different sprocket wheels (4, 7) relative to one another and located on the different sprocket wheels (4, 7) of the timing chain drive (1) are detected and then compared with a predetermined desired value (W₁), after which if the current value of the actual phase position deviates therefrom a signal is issued to indicate an unacceptable lengthening of the timing chain (8) and if the actual phase position varies permanently from the desired value (W₁) during a circulation of the timing chain a signal is issued which indicates that the timing chain (8) has undergone a more or less uniform lengthening leading to an unacceptably high level of wear on the chain overall.

2. A method as claimed in the preamble of claim 1,
**characterised in that**
when the engine is running, the relative phase position of the signals (42, 43, 44) of two on-board sensors (14, 15) integrated in the engine detecting the angular position of different sprocket wheels (4, 7) relative to one another and located on the different sprocket wheels (4, 7) of the timing chain drive (1) are detected and then compared with a predetermined desired value (W₂), after which if the current value of the actual phase position deviates therefrom a signal is issued to indicate an unacceptable lengthening of the timing chain (8) and if the actual phase position varies once or several times but not constantly from the desired value (W₂), during a circulation of the timing chain a signal is issued which indicates that the timing chain (8) has been unacceptably lengthened with respect to damage to an individual link.

3. A method as claimed in the preamble of claim 1,
**characterised in that**
when the engine is running, all relative phase positions of the signals (42, 43, 44) of two on-board sensors (14, 15) integrated in the engine detecting the angular position of different sprocket wheels (4, 7) relative to one another and located on the different sprocket wheels (4, 7) of the timing chain drive (1) are repeatedly detected within at least one circulation of the chain in a sequence of values which is then compared with a predetermined value (W₁), a more or less permanent shortfall of the values below the desired value (W₁) being evaluated as a signal to indicate an unacceptably high level of wear on the chain, which is transmitted to indicate that there has been an unacceptable lengthening of the timing chain (8).

4. A method as claimed in the preamble of claim 1,
**characterised in that**
when the engine is running, all relative phase positions of the signals (42, 43, 44) of two on-board sensors (14, 15) integrated in the engine detecting the angular position of different sprocket wheels (4, 7) relative to one another and located on the different sprocket wheels (4, 7) of the timing chain drive (1) are repeatedly detected within at least one circulation of the chain in a sequence of values, from which a maximum and a minimum value are detected and the difference between two values is derived, after which the difference is compared with a desired value (W₂), an overshoot of the difference above the desired value (W₂) being evaluated as a signal to indicate an unacceptably high degree of wear on the chain, which is emitted to indicate that there has been an unacceptable lengthening of the timing chain (9).

5. A method as claimed in the preamble of claim 1,
**characterised in that**
when the engine is running, all relative phase positions of the signals (42, 43, 44) of two on-board sensors (14, 15) integrated in the engine detecting the angular position of different sprocket wheels (4, 7) relative to one another and located on the different sprocket wheels (4, 7) of the timing chain drive (1) are repeatedly detected within at least one circulation of the chain in a sequence of values, which is then compared with a predetermined value sequence pattern indicating a specific state of wear on the timing chain (8), after which if the sequence of values and pattern repeatedly match on a periodic basis - conforming to the state of wear contained in the pattern - a signal is issued indicating the nature and/or the degree of wear on the timing chain (8).

6. A method as claimed in claim 5,
**characterised in that**
the sequence of values is electronically stored and compared with the pattern of the value sequence stored in an electronic memory.

7. A method as claimed in one of claims 1 to 6,
**characterised in that**
when the engine is running the phase position is detected dependent on engine speed, a measurement being taken of an engine speed-dependent time t₁, t₂ between the input of a signal (42, and 43) emitted by a sensor (14) arranged on the sprocket wheel (4) of the camshaft and a signal (44) emitted immediately thereafter by a sensor (15) arranged on the sprocket wheel (7) of the crankshaft as well as an engine speed-dependent time cycle T of a signal (44) from the sensor (15) within which the respective measurement time t₁, t₂ lies and the ratio of t₁, t₂ to the respective relevant time cycle T is derived, the value of which will give the respective phase position.

8. A method as claimed in one of claims 1 to 7,
**characterised in that**
the relative phase position of the signals (42, 43, 44) is detected continuously.

9. A method as claimed in one of claims 1 to 7,
**characterised in that**
the relative phase position of the signals (42, 43, 44) is detected only when the engine operating conditions are constant.

10. A method as claimed in one of claims 1 to 9,
**characterised in that**
known position detectors provided on the engine may be used as sensors (14, 15) for determining the position of the crankshaft and a camshaft.

11. A method as claimed in one of claims 1 or 2,
**characterised in that**
the signal indicating that there is unacceptable lengthening of the timing chain (8) when the current actual value of the phase position is at variance is applied to a display.

12. A method as claimed in one of claims 1 or 2,
**characterised in that**
the signal indicating that there is an unacceptable lengthening of the timing chain (8) if the current actual value of the phase position is at variance is stored in an electronic memory.

13. Use of a diagnostic device for monitoring the wear on at least one engine timing chain, in particular a timing chain (8) of a motor vehicle, which drives at least one camshaft from a crankshaft and meshes during the course of the chain drive (1) in the toothing of at least two sprocket wheels (2, 3, 4, 5, 6, 7) spaced at a distance from one another, having a sensor (14, 15) positioned on a sprocket wheel (4, 7) and having a signal processing device (40) to which the sensor (14, 15) applies signals (42, 43, 44) in cooperation with the chain drive (1), wherein the signal processing device (40) compares the signals (42, 43, 44) with a desired value signal and in the event of a variance therefrom issues a signal representative of intolerable wear of said timing chain (8) in terms of an unacceptable lengthening, in particular as a means of implementing the method as claimed in one of claims 1 to 12, wherein the on-board diagnostic device integrated in the engine monitors the wear of the timing chain (8) when the engine is running - relative to the chain drive (1) - contactlessly, the diagnostic device incorporating two sensors (14, 15) which are arranged on different sprocket wheels (4, 7), wherein at least one marking (16, 17, 18) is arranged on each of the sprocket wheels (4, 7) which issues a signal (42, 43, 44) to the relevant sensor (14, 15) representative of the angular position of the sprocket wheels (4, 7) relative to one another at least once for each rotation of the respective sprocket wheel (4, 7), wherein the signal processing device (40) in conjunction with a signal receiver (30, 31) contains a detection system (24, 25, 26, 27) of the phase position of the detected sensor signals (42, 43, 44) relative to one another and a desired value comparison (28, 36) pertaining to the phase position as well as a signal transmitter which issues a signal indicating a lengthening of the timing chain (8) if the phase position varies from the predetermined desired value (W₁, W₂), a functional module (35) being incorporated in the signal processing device (40) which on the one hand determines the maximum and the minimum value from a sequence of values detected in the detection system (24, 25, 26, 27) for at least every circulation of the chain and on the other derives the difference between the maximum and the minimum value respectively with each sequence of values.

14. Use of a diagnostic device as claimed in claim 13,
**characterised in that**
the desired value comparison (36) compares the differential value with a desired value (W₂) in order ascertain if there is any damage to an individual link.

15. Use of a diagnostic device as claimed in claim 13,
**characterised in that**
the desired value comparison (28) compares the maximum value with a desired value (W₁) in order to ascertain if wear on the chain overall is unacceptably high.

16. Use of a diagnostic device for monitoring the wear on at least one engine timing chain, in particular a timing chain (8) of a motor vehicle, which drives at least one camshaft from a crankshaft and meshes during the course of the chain drive (1) in the toothing of at least two sprocket wheels (2, 3, 4, 5, 6, 7) spaced at a distance from one another, having a sensor (14, 15) positioned on a sprocket wheel (4, 7) and having a signal processing device (40) to which the sensor (14, 15) applies signals (42, 43, 44) in cooperation with the chain drive (1), wherein the signal processing device (40) compares the signals (42, 43, 44) with a desired value signal and in the event of a variance therefrom issues a signal representative of intolerable wear of said timing chain (8) in terms of an unacceptable lengthening, in particular as a means of implementing the method as claimed in one of claims 1 to 12, wherein the on-board diagnostic device integrated in the engine monitors the wear of the timing chain (8) when the engine is running - relative to the chain drive (1) - contactlessly, the diagnostic device incorporating two sensors (14, 15) which are arranged on different sprocket wheels (4, 7), wherein at least one marking (16, 17, 18) is arranged on each of the sprocket wheels (4, 7) which issues a signal (42, 43, 44) to the relevant sensor (14, 15) representative of the angular position of the sprocket wheels (4, 7) relative to one another at least once for each rotation of the respective sprocket wheel (4, 7), wherein the signal processing device (40) in conjunction with a signal recorder (30, 31) contains a detection system (24, 25, 26, 27) of the phase position of the detected sensor signals (42, 43, 44) relative to one another and a desired value comparison (28, 36) pertaining to the phase position as well as a signal transmitter which issues a signal indicating a lengthening of the timing chain (8) if the phase position varies from the predetermined desired value (W₁, W₂), a pattern detection system being incorporated in the signal processing device (40) which compares the sequence of values of the phase positions detected in the detection system with a predetermined pattern of sequence values indicating a specific state of wear of the timing chain (8) and if the sequence of values and pattern repeatedly match one another on a periodic basis - conforming to the state of wear contained in the pattern - issues a signal indicating the nature and/or the level of the wear on the timing chain (8).

17. Use of a diagnostic device as claimed in claim 16,
**characterised in that**
the signal processing device (40) contains an electronic memory unit in which the value sequence pattern is stored and in that each sequence of values for the phase positions can also be stored in an electronic memory for comparison with the pattern.

18. Use of a diagnostic device as claimed in one of claims 13 to 17,
**characterised in that**
the markings (16, 17, 18) are arranged on the end faces of the sprocket wheels (4, 7).

19. Use of a diagnostic device as claimed in one of claims 13 to 18,
**characterised in that**
the sensors (14, 15) are known position detectors provided on the engine for detecting the position of the crankshaft and a camshaft.

20. Use of a diagnostics device as claimed in one of claims 13 to 19,
**characterised in that**
the markings (16, 17, 18) are designed as a pin made from a magnetisable material projecting out from each sprocket wheel (4, 7) and in that the sensors (14, 15) are each set up as stationary induction transmitters mounted at a slight distance from the circular movement described by the pin and issue a distinctive electronic, data-processable signal (42, 43, 44) as the pin passes by.

21. Use of a diagnostic device as claimed in one of claims 13 to 20,
**characterised in that**
the diagnostic device incorporates a display, which can be activated from the signal transmitter by means of the signal indicating that there is a lengthening in the timing chain (8) in order to draw attention to the fact that the timing chain is unacceptably worn.

22. Use of a diagnostic device as claimed in one of claims 13 to 21,
**characterised in that**
the signal processing device (40) contains an electronic memory in which the signal emitted by the signal transmitter indicating a lengthening of the timing chain (8) can be stored.

23. Use of a diagnostic device as claimed in one of claims 13 to 22,
**characterised in that**
a plurality of markings arranged at a short distance from one another is provided on the sprocket wheels (4, 7), being so designed that a distinction can be made between the signals generated in cooperation with the sensor (14, 15).

## Revendications

1. Procédé destiné à surveiller l'usure d'au moins une chaîne de commande ou de distribution d'un moteur, notamment d'une chaîne de distribution d'un moteur de véhicule automobile, selon lequel on capte sur une roue à chaîne de la transmission à chaîne, des signaux relatifs à la marche de la chaîne, que l'on compare à une valeur de consigne prescrite, une usure de la chaîne de distribution concernant un allongement non admissible de cette chaîne étant diagnostiquée en cas d'écart par rapport à ladite valeur de consigne,
**caractérisé** en ce qu'en fonctionnement du moteur, on détermine la position de phase relative des signaux (42, 43, 44) de deux capteurs de bord (14, 15) intégrés au moteur, relevant la position angulaire de l'une par rapport à l'autre de différentes roues à chaîne (4, 7) et se trouvant sur des roues à chaîne différentes (4, 7) de la transmission à chaîne de distribution (1), et on la compare à une valeur de consigne (W1) prescrite, suite à quoi, en cas d'écart de la valeur réelle actuelle de la position de phase par rapport à ladite valeur de consigne, on délivre un signal indiquant un allongement non admissible de la chaîne de distribution (8), un signal, qui identifie un allongement approximativement régulier de la chaîne de distribution (8) et ainsi une usure de chaîne globale d'une importance non admissible, étant délivré en cas d'écart permanent de la position de phase réelle par rapport à la valeur de consigne (W1) durant un tour de révolution de la chaîne de distribution.

2. Procédé selon le préambule de la revendication 1,
**caractérisé** en ce qu'en fonctionnement du moteur, on détermine la position de phase relative des signaux (42, 43, 44) de deux capteurs de bord (14, 15) intégrés au moteur, relevant la position angulaire de l'une par rapport à l'autre de différentes roues à chaîne (4, 7) et se trouvant sur des roues à chaîne différentes (4, 7) de la transmission à chaîne de distribution (1), et on la compare à une valeur de consigne (W2) prescrite, suite à quoi, en cas d'écart de la valeur réelle actuelle de la position de phase par rapport à ladite valeur de consigne, on délivre un signal identifiant un allongement non admissible de la chaîne de distribution (8), un signal pour un allongement non admissible de la chaîne de distribution (8) quant à une avarie de maillon individuel, étant délivré dans le cas de l'apparition singulière ou multiple, toutefois non permanente, d'un écart de la position de phase réelle par rapport à la valeur de consigne (W2) durant un tour de révolution de la chaîne de distribution.

3. Procédé selon le préambule de la revendication 1,
**caractérisé** en ce qu'en fonctionnement du moteur, on détermine de manière toujours renouvelée durant au moins un tour de révolution de la chaîne, l'ensemble des positions de phase relatives des signaux (42, 43, 44) de deux capteurs de bord (14, 15), intégrés au moteur, relevant la position angulaire de l'une par rapport à l'autre de différentes roues à chaîne (4, 7) et se trouvant sur des roues à chaîne différentes (4, 7) de la transmission à chaîne de distribution (1), selon une suite de valeurs, qui est ensuite comparée à une valeur de consigne (W1) prescrite, le passage sensiblement permanent des valeurs en-dessous de la valeur de consigne (W1) étant traité en tant que signal pour une usure de chaîne globale d'une importance non admissible, et délivré pour identifier un allongement non admissible de la chaîne de distribution (8).

4. Procédé selon le préambule de la revendication 1,
**caractérisé** en ce qu'en fonctionnement du moteur, on détermine de manière toujours renouvelée durant au moins un tour de révolution de la chaîne, l'ensemble des positions de phase relatives des signaux (42, 43, 44) de deux capteurs de bord (14, 15), intégrés au moteur, relevant la position angulaire de l'une par rapport à l'autre de différentes roues à chaîne (4, 7) et se trouvant sur des roues à chaîne différentes (4, 7) de la transmission à chaîne de distribution (1), selon une suite de valeurs, à partir de laquelle on détermine une valeur maximale et une valeur minimale et on forme la différence entre les deux valeurs, suite à quoi on compare la différence à une valeur de consigne (W2), un passage de la différence au-dessus de cette valeur de consigne (W2) étant traité en tant que signal pour une usure d'un maillon de chaîne individuel d'une importance non admissible, qui est délivré pour identifier un allongement non admissible de la chaîne de distribution (8).

5. Procédé selon le préambule de la revendication 1,
**caractérisé** en ce qu'en fonctionnement du moteur, on détermine de manière toujours renouvelée durant au moins un tour de révolution de la chaîne, l'ensemble des positions de phase relatives des signaux (42, 43, 44) de deux capteurs de bord (14, 15), intégrés au moteur, relevant la position angulaire de l'une par rapport à l'autre de différentes roues à chaîne (4, 7) et se trouvant sur des roues à chaîne différentes (4, 7) de la transmission à chaîne de distribution (1), selon une suite de valeurs, qui est comparée à un modèle de suite de valeurs prescrit définissant un état d'usure déterminé de la chaîne de distribution (8), suite à quoi on délivre, dans le cas d'une correspondance répétée périodiquement, entre la suite de valeurs et le modèle, un signal identifiant le type et/ou le degré de l'usure de la chaîne de distribution (8), conformément à l'état d'usure contenu dans le modèle.

6. Procédé selon la revendication 5,
**caractérisé** en ce que la suite de valeurs est mémorisée électroniquement et est comparée au modèle de suite de valeurs stocké dans une mémoire électronique.

7. Procédé selon l'une des revendications 1 à 6,
**caractérisé** en ce que l'on détermine la position de phase, en fonctionnement du moteur, de manière indépendante de la vitesse de rotation, en ce que l'on mesure un temps t₁, t₂ qui dépend de la vitesse de rotation du moteur, entre l'entrée d'un signal (42 ou respectivement 43) déclenché par un capteur (14) placé au niveau de la roue à chaîne (4) de l'arbre à cames et un signal (44) lui succédant directement, déclenché par un capteur (15) placé au niveau de la roue à chaîne (7) du vilebrequin, ainsi qu'une durée de période T d'un signal (44) du capteur (15), qui dépend de la vitesse de rotation du moteur et dans laquelle se situe l'intervalle de temps mesuré t₁, t₂, et en ce que l'on forme le rapport de t₁, t₂ à la durée de période T respectivement associée, rapport dont la valeur indique la position de phase respectivement considérée.

8. Procédé selon l'une des revendications 1 à 7,
**caractérisé** en ce que la position de phase relative des signaux (42, 43, 44) est déterminée en permanence.

9. Procédé selon l'une des revendications 1 à 7,
**caractérisé** en ce que la position de phase relative des signaux (42, 43, 44) est déterminée uniquement dans des conditions de fonctionnement du moteur, constantes.

10. Procédé selon l'une des revendications 1 à 9,
**caractérisé** en ce qu'en guise de capteurs (14, 15) on utilise des capteurs de position déjà connus en soi, existant sur le moteur, pour la détermination de la position du vilebrequin et d'un arbre à cames.

11. Procédé selon l'une des revendications 1 ou 2,
**caractérisé** en ce que le signal identifiant un allongement non admissible de la chaîne de distribution (8) dans le cas d'un écart de la valeur actuelle réelle de la position de phase de celle-ci, est visualisé.

12. Procédé selon l'une des revendications 1 ou 2,
**caractérisé** en ce que le signal identifiant un allongement non admissible de la chaîne de distribution (8) dans le cas d'un écart de la valeur actuelle réelle de la position de phase de celle-ci, est stocké dans une mémoire électronique.

13. Utilisation d'un dispositif de diagnostic pour surveiller l'usure d'au moins une chaîne de commande ou de distribution d'un moteur, notamment d'une chaîne de distribution (8) d'un moteur de véhicule automobile, qui entraîne, à partir d'un vilebrequin, au moins un arbre à cames, et qui dans le parcours de la transmission à chaîne (1) engrène avec la denture d'au moins deux roues à chaîne (2, 3, 4, 5, 6, 7) espacées l'une de l'autre, le dispositif comprenant également un capteur (14, 15), qui est positionné au niveau d'une roue à chaîne (4, 7), et un dispositif de traitement de signal (40) auquel le capteur (14, 15), en coopération avec la transmission à chaîne (1), délivre des signaux (42, 43, 44), le dispositif de traitement de signal (40) comparant les signaux (42, 43, 44) à un signal de valeur de consigne et délivrant, en cas d'écart avec celui-ci, un signal correspondant à une usure non tolérable de la chaîne de distribution (8) citée quant à un allongement non admissible, notamment pour la mise en oeuvre du procédé selon l'une des revendications 1 à 12, dans laquelle le dispositif de diagnostic de bord, intégré au moteur surveille, sans contact, en fonctionnement du moteur, l'usure de la chaîne de distribution (8) relativement à la transmission à chaîne (1), le dispositif de diagnostic comprenant deux capteurs (14, 15) disposés sur deux roues à chaîne différentes, sur les roues à chaîne (4, 7) est placée respectivement au moins une marque (16, 17, 18), qui déclenche dans le capteur (14, 15) associé, au moins une fois par tour de révolution de la roue à chaîne (14, 15) respective, un signal (42, 43, 44) représentant la position angulaire réciproque des roues à chaînes (4, 7), le dispositif de traitement de signal (40), en-dehors d'un captage de signal (30, 31), comprenant un relevé (24, 25, 26, 27) de la position de phase réciproque des signaux de capteur (42, 43, 44) captés, et une comparaison de valeur de consigne (28, 36) relativement à la position de phase, ainsi qu'un générateur de signal, qui, en cas d'écart de la position de phase par rapport à la valeur de consigne (W1, W2)) prescrite, délivre un signal identifiant un allongement de la chaîne de distribution (8), et dans lequel le dispositif de traitement de signal (40) est intégré un module de fonction (35), qui d'une part détermine la valeur maximale et la valeur minimale d'une suite de valeurs de toutes les positions de phase, captée par le relevé (24, 25, 26, 27) pour à chaque fois au moins un tour de révolution de la chaîne, et qui d'autre part forme nouvellement pour chaque suite de valeurs, la différence entre la valeur maximale et la valeur minimale.

14. Utilisation d'un dispositif de diagnostic selon la revendication 13,
**caractérisée** en ce que la comparaison de valeur de consigne (36) compare la valeur de la différence à une valeur de consigne (W2) pour évaluer une éventuelle avarie de maillon individuel.

15. Utilisation d'un dispositif de diagnostic selon la revendication 13,
**caractérisée** en ce que la comparaison de valeur de consigne (28) compare la valeur maximale à une valeur de consigne (Wl) pour évaluer une éventuelle usure globale de la chaîne d'une importance non admissible.

16. Utilisation d'un dispositif de diagnostic pour surveiller l'usure d'au moins une chaîne de commande ou de distribution d'un moteur, notamment d'une chaîne de distribution (8) d'un moteur de véhicule automobile, qui entraîne, à partir d'un vilebrequin, au moins un arbre à cames, et qui dans le parcours de la transmission à chaîne (1) engrène avec la denture d'au moins deux roues à chaîne (2, 3, 4, 5, 6, 7) espacées l'une de l'autre, le dispositif comprenant également un capteur (14, 15), qui est positionné au niveau d'une roue à chaîne (4, 7), et un dispositif de traitement de signal (40) auquel le capteur (14, 15), en coopération avec la transmission à chaîne (1), délivre des signaux (42, 43, 44), le dispositif de traitement de signal (40) comparant les signaux (42, 43, 44) avec un signal de valeur de consigne et délivrant, en cas d'écart avec celui-ci, un signal correspondant à une usure non tolérable de la chaîne de distribution (8) citée quant à un allongement non admissible, notamment pour la mise en oeuvre du procédé selon l'une des revendications 1 à 12, dans laquelle le dispositif de diagnostic de bord, intégré au moteur surveille, sans contact, en fonctionnement du moteur, l'usure de la chaîne de distribution (8) relativement à la transmission à chaîne (1), le dispositif de diagnostic comprenant deux capteurs (14, 15) disposés sur deux roues à chaîne différentes, sur les roues à chaîne (4, 7) est placée respectivement au moins une marque (16, 17, 18), qui déclenche dans le capteur (14, 15) associé, au moins une fois par tour de révolution de la roue à chaîne (14, 15) respective, un signal (42, 43, 44) représentant la position angulaire réciproque des roues à chaînes (4, 7), le dispositif de traitement de signal (40), en-dehors d'un captage de signal (30, 31), comprenant un relevé (24, 25, 26, 27) de la position de phase réciproque des signaux de capteur (42, 43, 44) captés, et une comparaison de valeur de consigne (28, 36) relativement à la position de phase, ainsi qu'un générateur de signal, qui, en cas d'écart de la position de phase par rapport à la valeur de consigne (W1, W2)) prescrite, délivre un signal identifiant un allongement de la chaîne de distribution (8), et le dispositif de traitement de signal (40) comprenant une reconnaissance de modèle qui compare la suite de valeurs des positions de phase déterminée dans le relevé à un modèle de suite de valeurs prescrit caractérisant un état d'usure déterminé de la chaîne de distribution (8), et qui, en cas d'une correspondance répétée périodiquement entre la suite de valeurs et le modèle, délivre un signal identifiant le type et/ou le degré de l'usure de la chaîne de distribution (8), conformément à l'état d'usure contenu dans le modèle.

17. Utilisation d'un dispositif de diagnostic selon la revendication 16,
**caractérisée** en ce que le dispositif de traitement de signal (40) comprend une unité de mémoire électronique dans laquelle est mémorisée le modèle de suite de valeurs, et en ce que la suite de valeurs des positions de phase considérée, ayant été déterminée, peut également être mémorisée dans une mémoire électronique.

18. Utilisation d'un dispositif de diagnostic selon l'une des revendications 13 à 17,
**caractérisée** en ce que les marques (16, 17, 18) sur les roues à chaîne (4, 7) sont placées sur le côté frontal de celles-ci.

19. Utilisation d'un dispositif de diagnostic selon l'une des revendications 13 à 18,
**caractérisée** en ce que les capteurs (14, 15) sont des capteurs de position déjà connus en soi, existant sur le moteur, pour la détermination de la position du vilebrequin et d'un arbre à cames.

20. Utilisation d'un dispositif de diagnostic selon l'une des revendications 13 à 19,
**caractérisée** en ce que les marques (16, 17, 18) sont réalisées par une cheville en un matériau magnétisable, qui fait saillie de la roue à chaîne (4, 7) considérée, et en ce que les capteurs (14, 15) sont formés chacun par un capteur à induction placé en position fixe et maintenu à faible distance du cercle du mouvement décrit par la cheville, et fournissant, lors du passage de la cheville, un signal (42, 43, 44) incontestable pouvant être traité électroniquement sur le plan informatique.

21. Utilisation d'un dispositif de diagnostic selon l'une des revendications 13 à 20,
**caractérisée** en ce que le dispositif de diagnostic comprend un système de visualisation, qui, pour la reconnaissance extérieure d'une usure de chaîne de distribution non admissible, peut être rendu actif par le générateur de signal, par l'intermédiaire du signal identifiant un allongement de la chaîne de distribution (8).

22. Utilisation d'un dispositif de diagnostic selon l'une des revendications 13 à 21,
**caractérisée** en ce que le dispositif de traitement de signal (40) comprend une mémoire électronique dans laquelle peut être stocké le signal délivré par le générateur de signal et identifiant un allongement de la chaîne de distribution (8).

23. Utilisation d'un dispositif de diagnostic selon l'une des revendications 13 à 22,
**caractérisée** en ce que sur les roues à chaîne (4, 7) sont placées un grand nombre de marques étroitement espacées les unes des autres et d'une configuration telle, que les signaux engendrés en coopération avec le capteur (14, 15) puissent être distingués les uns des autres.
